# EUROPEAN PATENT APPLICATION

(11) **EP 4 800 948 A1**
(43) Date of publication of application: **02.09.2026**
(21) Application number: 24901139.6
(22) Date of filing: 06.12.2024
(51) Int. Cl.: H04L 1/00, H04W 24/08, H04L 69/04, G06N 20/00, H04W 24/10, H04L 25/02

(54) **ARTIFICIAL INTELLIGENCE-BASED MONITORING METHOD AND DEVICE**

(30) Priority: 08.12.2023 KR 20230177766
(71) Applicant: Samsung Electronics Co., Ltd., Suwon-si, Gyeonggi-do 16677 (KR)
(72) Inventor: HWANG, Byeonghun, Suwon-si, Gyeonggi-do 16677 (KR); KIM, Suhwook, Suwon-si, Gyeonggi-do 16677 (KR); KIM, Wonjun, Suwon-si, Gyeonggi-do 16677 (KR); BAIK, Jungsuk, Suwon-si, Gyeonggi-do 16677 (KR)
(74) Representative: Nederlandsch Octrooibureau
(86) International application number: PCT/KR2024/019981
(87) International publication number: WO 2025/121953

(57) **Abstract**

The present disclosure relates to a 5G or 6G communication system for supporting higher data transmission rates than a 4G communication system, such as LTE. This method by a base station may comprise the operations of: while artificial intelligence (AI)-based channel state information (CSI) compression by a terminal (UE) is being deactivated, receiving a report message including a monitoring input related to monitoring of the AI-based CSI compression from the terminal; performing first monitoring of the AI-based CSI compression on the basis of the monitoring input; transmitting an indication message for activating the AI-based CSI compression, which is generated on the basis of a result of the first monitoring, to the terminal; receiving compressed CSI obtained by the AI-based CSI compression from the terminal after transmitting the indication message; and performing second monitoring of the AI-based CSI compression on the basis of the compressed CSI.

## Description

### [Technical Field]

The disclosure relates to a method and device for performing artificial intelligence (AI)-based monitoring in a wireless communication system.

### [Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; the use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

A wireless communication system such as, e.g., a 6G communication system may use beam management and multiple frequency bands to support various services. A user equipment (UE) may perform channel estimation for various channel environments on a per-beam and/or per-frequency-band basis and report channel state information (CSI) representing the estimated channel to a base station. A CSI compression technique may be used to reduce resource consumption associated with CSI reporting by the UE.

In a 5G NR system, a CSI report may be generated using a codebook scheme. The channel state recovered by the codebook may suffer from information loss according to the quantization level of the codebook. When the codebook is configured in various ways to reduce the information loss, the amount of data to be transmitted via the CSI increases. Accordingly, in addition to codebook-based channel feedback of 5G NR, a CSI compression technique is being discussed in which a channel state estimated by the UE is compressed by an AI-based encoder and transmitted, and the base station recovers the compressed channel state by an AI-based decoder.

### [Detailed Description of the Invention]

### [Technical Problem]

The disclosure provides a method and device for monitoring loss of channel state information (CSI) compression in a wireless communication system.

The disclosure provides a method and device for performing network-side monitoring of CSI compression in a wireless communication system.

The disclosure provides a method and device for monitoring performance of artificial intelligence (AI)-based CSI compression by a network.

The disclosure provides a method and device for activating, by a network, deactivated artificial intelligence (AI)-based CSI compression.

### [Technical Solution]

A method by a base station according to an embodiment may include: receiving, from a UE, a reporting message comprising a monitoring input related to monitoring of artificial intelligence (AI)-based channel state information (CSI) compression, while the AI-based CSI compression by the UE is deactivated; performing a first monitoring of the AI-based CSI compression based on the monitoring input; transmitting, to the UE, an indication message for activating the AI-based CSI compression generated based on a result of the first monitoring; receiving, from the UE, compressed CSI by the AI-based CSI compression after transmitting the indication message; and performing a second monitoring of the AI-based CSI compression based on the compressed CSI.

A method by a UE according to an embodiment may include: transmitting, to a base station, a reporting message comprising a monitoring input related to monitoring of AI-based channel state information (CSI) compression, while the AI-based CSI compression is deactivated; receiving, from the base station, an indication message for activating the AI-based CSI compression after transmitting the reporting message; and transmitting, to the base station, compressed CSI by the AI-based CSI compression after receiving the indication message.

A base station according to an embodiment may include a transceiver and a processor coupled to the transceiver. The processor may be configured to perform: receiving, from a UE, a reporting message comprising a monitoring input related to monitoring of AI-based channel state information (CSI) compression, while the AI-based CSI compression by the UE is deactivated; performing a first monitoring of the AI-based CSI compression based on the monitoring input; transmitting, to the UE, an indication message for activating the AI-based CSI compression generated based on a result of the first monitoring; receiving, from the UE, compressed CSI by the AI-based CSI compression after transmitting the indication message; and performing a second monitoring of the AI-based CSI compression based on the compressed CSI.

A UE according to an embodiment may include a transceiver and a processor coupled to the transceiver. The processor may be configured to perform: transmitting, to a base station, a reporting message comprising a monitoring input related to monitoring of AI-based channel state information (CSI) compression, while the AI-based CSI compression is deactivated; receiving, from the base station, an indication message for activating the AI-based CSI compression after transmitting the reporting message; and transmitting, to the base station, compressed CSI by the AI-based CSI compression after receiving the indication message.

### [Advantageous Effects]

The disclosure may provide a method for monitoring loss of channel state information (CSI) compression in a wireless communication system.

### [Brief Description of Drawings]

The foregoing and other aspects, features and advantages of predetermined embodiments of the disclosure will become more apparent from the following description taken in conjunction with the accompanying drawings.
FIG. 1 is a view illustrating a CSI reporting procedure according to an embodiment of the disclosure.
FIG. 2 is a view illustrating non-AI-based network-side monitoring and UE-side monitoring according to an embodiment of the disclosure.
FIG. 3 is a view illustrating network-side monitoring according to an embodiment of the disclosure.
FIG. 4 is a view illustrating a monitoring type indication according to an embodiment of the disclosure.
FIG. 5 is a sequence diagram illustrating a procedure for performing UE-side monitoring according to an embodiment of the disclosure.
FIG. 6 is a sequence diagram illustrating a procedure for performing network-side monitoring according to an embodiment of the disclosure.
FIG. 7 is a sequence diagram illustrating a procedure for activating AI-based CSI compression according to an embodiment of the disclosure.
FIG. 8 is a sequence diagram illustrating a procedure for performing UE-side monitoring fallback according to an embodiment of the disclosure.
FIG. 9 is a view illustrating an example configuration of a UE in a wireless communication system according to an embodiment of the disclosure.
FIG. 10 is a view illustrating an example configuration of a base station in a wireless communication system according to an embodiment of the disclosure.

### [Mode for Carrying out the Invention]

Hereinafter, embodiments of the disclosure are described with reference to the accompanying drawings. When determined to make the subject matter of the present disclosure unclear, the details of the known functions or configurations may be skipped. Terms to be described below are terms defined considering functions in the disclosure, which may vary according to intentions or customs of users and operators. Therefore, the terms should be defined based on the overall disclosure.

For the same reasons, some elements may be exaggerated or schematically illustrated. The size of each element does not necessarily reflect the real size of the element. The same reference numbers may be given to the same or corresponding components in each drawing.

Advantages and features of the present disclosure, and methods for achieving the same may be understood through the embodiments to be described below taken in conjunction with the accompanying drawings. However, the scope of the disclosure is not limited to embodiments described herein, but rather, other various changes may be made thereto. Various embodiments are provided to make the disclosure complete and to fully convey the scope of the disclosure to those skilled in the art to which the disclosure belongs, and the scope of the claims of the disclosure is defined solely by the claims. The same reference numerals throughout the specification may refer to the same elements.

It is understood that each block of the flowchart diagrams and combinations of the flowchart diagrams may be performed by computer program instructions. These computer program instructions may be loaded into a processor of a general purpose computer, special purpose computer, or other programmable data processing device, so that the instructions executed by the processor of the computer or other programmable data processing device create means for implementing the functions described in the flowchart block(s). Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Each block may represent a module, segment, or portion of code comprising one or more executable instructions for implementing the specified logical function(s). It should also be noted that in some alternative implementations, the functions noted in the blocks may occur out of order. For example, two blocks that are consecutively shown may be performed substantially simultaneously or in a reverse order depending on corresponding functions.

The term "unit" as used in embodiments of the disclosure refers to a software or hardware component, and a "unit" may perform predetermined roles. However, "~unit" is not meant to be limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. Further, in various embodiments of the disclosure, a "...unit" may include one or more processors.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

In embodiments of the disclosure, a user equipment (UE) may be a terminal, a mobile station (MS), a cellular phone, a smartphone, a computer, or various electronic devices capable of performing a communication function. In embodiments of the disclosure, a base station (BS) is a network entity that performs resource allocation for the UE, and may be at least one of a Node B, an eNB (eNode B), a gNB (gNode B), a radio access unit, a base station controller, or a node on a network.

The embodiments of the disclosure may also be applied to other communication systems having a similar technical background or channel type to the embodiments of the disclosure described below. The embodiments of the disclosure may be applied to other communication systems with some modifications without departing significantly from the scope of the disclosure, as determined by those skilled in the relevant technical field.

In describing the embodiments of the disclosure in detail, the communication system may use a wireless communication system, such as, e.g., an LTE system proposed by the 3rd generation partnership project (3GPP), a 5G communication system based on 5G communication standards (new radio (NR)), or a post-5G communication system (e.g., a 6G communication system). The disclosure may also be applicable with minor modifications to other communication systems having a similar technical background without significantly departing from the scope of the disclosure, as determined by those skilled in the art. For convenience of description below, terms and names defined in 3GPP specifications may be partially used. However, the disclosure is not limited by the terms and names, and may be equally applied to systems conforming to other specifications.

The embodiments of the disclosure described below is described with reference to AI-based CSI compression, but the embodiments of the disclosure may be extended and applied to various techniques including model monitoring. In an embodiment, examples of techniques to which model monitoring according to embodiments of the disclosure may be applied are as follows.
- Cases where ground truth and AI model output are present separately in the UE and network (ground truth and AI model output are present in UE and NW separately); and/or
- Cases where the overhead for ground truth (or AI model output) transmission is large (large overhead for ground truth (or AI model output) transmission)

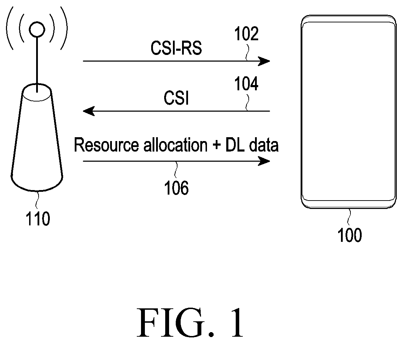

FIG. 1 is a view illustrating a CSI reporting procedure according to an embodiment of the disclosure.

Referring to FIG. 1, a base station 110 (e.g., gNB) may transmit a CSI-RS 102, which is a reference signal (RS) transmitted to identify a channel state of a UE 100. Prior to transmission of the CSI-RS 102, the base station 110 may transmit (e.g., broadcast or unicast) CSI-RS configuration information setting parameters related to transmission of the CSI-RS 102. The UE 100 may receive the CSI-RS 102 based on the CSI-RS configuration information. In an embodiment, the CSI-RS configuration information may define at least one of a sequence, frequency resource, time resource, and/or period included in the CSI-RS 102.

The UE 100 may estimate a channel state based on the CSI-RS 102 and report CSI 104 representing the estimated channel state to the base station 110. Prior to reporting the CSI 104, the base station 110 may transmit (e.g., broadcast or unicast) CSI configuration information setting parameters related to transmission of the CSI 104. The UE 100 may transmit the CSI 104 based on the CSI configuration information.

In an embodiment, the CSI configuration information may include at least one of a type of information, frequency resource, time resource, and/or periodic/aperiodic configuration included in the CSI 104. In an embodiment, the CSI 104 may include at least one of a channel quality indicator (CQI), a precoding matrix indicator (PMI), a CSI-RS resource indicator, a synchronization signal/physical broadcast channel (SS/PBCH) block resource indicator, a layer indicator (LI), a rank indicator, layer 1 reference signal received power (L1-RSRP), layer 1 signal-to-noise and interference ratio (L1-SINR), or a capability index. As an example, the PMI may indicate a precoding matrix comprising weights to be applied to multiple layer signals.

The base station 110 may determine resource allocation for downlink or uplink transmission based on the CSI 104 reported from the UE 100. In an embodiment, the base station 110 may transmit, to the UE 100, resource allocation for downlink transmission (e.g., physical downlink control channel (PDCCH)) and downlink data (e.g., physical downlink shared channel (PDSCH)) 106.

In the CSI reporting procedure, the UE 100 may perform channel estimation based on the CSI 104 and determine an estimated channel H_hat. The UE 100 may perform eigenvalue decomposition (EVD) based on the estimated channel to determine a matrix V as illustrated in [Equation 1] below, in order to generate a PMI related to a precoding matrix to be used by the base station 110 for downlink transmission.${\hat{H}}^{H} H = V ∧ {V}^{H}$

Here, Ĥ represents the estimated matrix (e.g., H_hat), the superscript H represents the conjugate transpose, and ^ represents conjunction.

The UE 100 may generate a PMI comprising a codebook index corresponding to the matrix V based on a pre-agreed codebook, e.g., a codebook defined in 3GPP technical specification (TS) 38.214. The UE 100 may include the PMI in the CSI 104 and report it to the base station 110.

A codebook-based PMI may differ from the V actually measured by the UE 100 due to granularity limitations of the codebook, which may result in inaccurate resource allocation determined by the base station 110 and degradation of MIMO performance. For example, since the performance of a multi-user MIMO system is greatly influenced by the CSI (e.g., CSI 104) fed back by each UE (e.g., UE 100), an MU-MIMO system may require more accurate CSI feedback. Increasing the number of bits used for CSI reporting for more accurate CSI feedback may generate very large overhead as the number of antennas of the base station 110, bandwidth, and/or codebook granularity increase.

In the 3GPP Rel-18 study item (SI), AI/ML-based CSI compression is being discussed, in which the matrix V itself is compressed and reported instead of indicating a codebook matrix similar to the matrix V. In AI/ML-based CSI compression, the UE 100 may utilize artificial intelligence (AI) and/or machine learning (ML) (hereinafter referred to as AI/ML) to compress the matrix V itself to generate a low-dimensional vector z, and include the vector z in the PMI and report it to the base station 110. The base station 110 may recover the matrix V from the vector z and utilize the recovered matrix V for channel-adaptive scheduling (e.g., resource allocation).

AI modeling such as AI/ML-based CSI compression may include monitoring to identify whether the AI modeling is operating correctly. In an embodiment, monitoring in AI/ML-based CSI compression may include an operation of calculating a loss (e.g., similarity) between a ground truth obtained through measurement by the UE 100 (e.g., matrix V) and a matrix recovered by the network (e.g., base station 110) (e.g., V_hat). In the disclosure, monitoring of AI/ML-based CSI compression is described as an example of monitoring of AI modeling. AI/ML-based CSI compression may suffer from performance degradation due to a bad training/validation dataset, imperfect model selection and switching, data distribution shift, or unexpected events, and such performance degradation may be calculated as Loss(V, V_hat).

Monitoring of AI/ML-based CSI compression may be classified into UE-side monitoring and network-side monitoring. In an embodiment, at least one of UE-side monitoring or network-side monitoring may be performed on an AI basis. UE-side monitoring may include an operation in which the UE 100 computes V_hat, which is a matrix recovered based on a vector z generated by compressing (e.g., auto-encoding) the matrix V, and calculates a loss between the original matrix V and the recovered V_hat. UE-side monitoring may depend on the AI capability of the UE 100. In an embodiment, the AI capability of the UE 100 may include AI computing-related overhead (e.g., input/output (I/O) memory bandwidth and/or AI-driven floating point operations (FLOPs)) and/or AI model size-related overhead (e.g., memory storage for AI model structure/parameters).

Network-side monitoring may include an operation in which the network (e.g., base station 110) obtains monitoring information (e.g., matrix V as ground truth or quantized matrix V_q) from the UE 100, computes V_hat, which is a matrix recovered based on a vector z fed back from the UE 100, and calculates a loss between the obtained matrix V and the recovered matrix V_hat. Network-side monitoring may be performed using a ground truth (e.g., V or V_q) reported from the UE 100 to the base station 110.

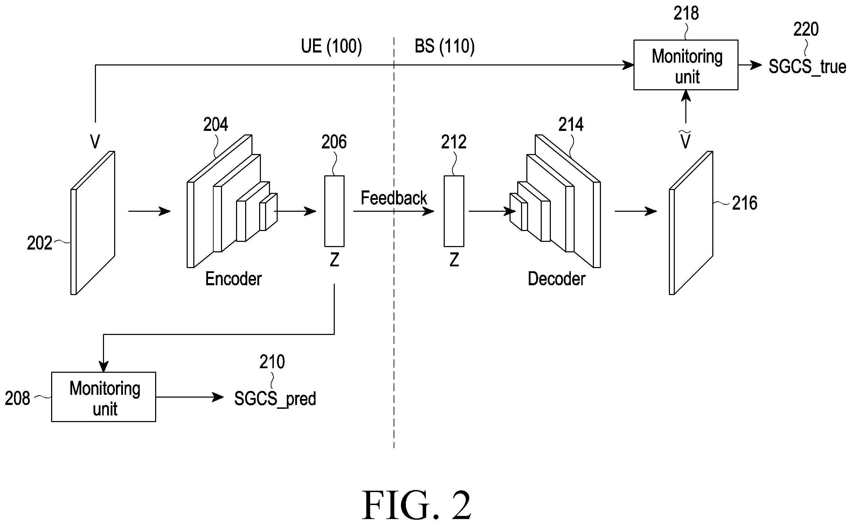

FIG. 2 is a view illustrating non-AI-based network-side monitoring and UE-side monitoring according to an embodiment of the disclosure.

Referring to FIG. 2, the UE 100 may include an encoder 204 performing CSI compression. The UE 100 may obtain a matrix V 202 for channel state feedback. In an embodiment, the matrix V 202 may be obtained by performing eigenvalue decomposition on a channel (e.g., H_hat) estimated by the UE 100 based on a CSI-RS (e.g., CSI-RS 102) received from the base station 110. The encoder 204 may encode (e.g., compress) the matrix V 202 based on a designated AI model and output a vector z 206. In an embodiment, the vector z 206 may include at least one of the elements of the matrix V 202 and/or information related thereto. The UE 100 may include the vector z 206 in the CSI (e.g., CSI 104) and feed it back to the base station 110.

The base station 110 may include a decoder 214 configured to operate in correspondence with the encoder 204 of the UE 100. The base station 110 may obtain a vector z 212 (e.g., vector z 206) from the CSI (e.g., CSI 104) received from the UE 100. The decoder 214 may decode (e.g., decompress) the vector z 212 based on a designated AI model and output a recovered matrix V_hat 216.

In an embodiment, the base station 110 may include a monitoring unit 218 for non-AI-based network-side monitoring. The monitoring unit 218 of the base station 110 receives the recovered matrix V_hat 216 as input, and may also receive a matrix V 202 as ground truth from the UE 100. The monitoring unit 218 may compare the matrix V 202 and the recovered matrix V_hat 216 to calculate a squared generalized cosine similarity (SGCS) corresponding to the actual loss (e.g., SGCS_true 220). The base station 110 may utilize the monitoring result by the monitoring unit 218 in various ways. In an embodiment, the base station 110 may reconfigure the AI-based CSI compression based on the monitoring result. In an embodiment, the base station 110 may instruct the UE 100 to at least temporarily deactivate the AI-based CSI compression based on the loss according to the monitoring result falling outside a designated threshold range.

In an embodiment, the UE 100 may include a monitoring unit 208 for UE-side monitoring. The monitoring unit 208 of the UE 100 may receive the vector z 206, which is the output of the encoder 204, as input. The monitoring unit 208 may be configured to operate in correspondence with the encoder 204. In an embodiment, the monitoring unit 208 may predict a loss based on the vector z 206 according to a designated AI model without recovering the matrix V_hat, and calculate an SGCS corresponding to the predicted loss (e.g., SGCS_pred 210). Depending on the AI model, the SGCS_pred 210 may be similar to SGCS_true. The UE 100 may utilize the monitoring result by the monitoring unit 208 in various ways. In an embodiment, the UE 100 may report information indicating the monitoring result (e.g., predicted loss) to the base station 110. In an embodiment, the UE 100 may request the base station 110 to reconfigure the AI-based CSI compression based on the monitoring result. In an embodiment, the UE 100 may request (or notify) the base station 110 to at least temporarily deactivate the AI-based CSI compression based on the predicted loss according to the monitoring result falling outside a designated threshold range.

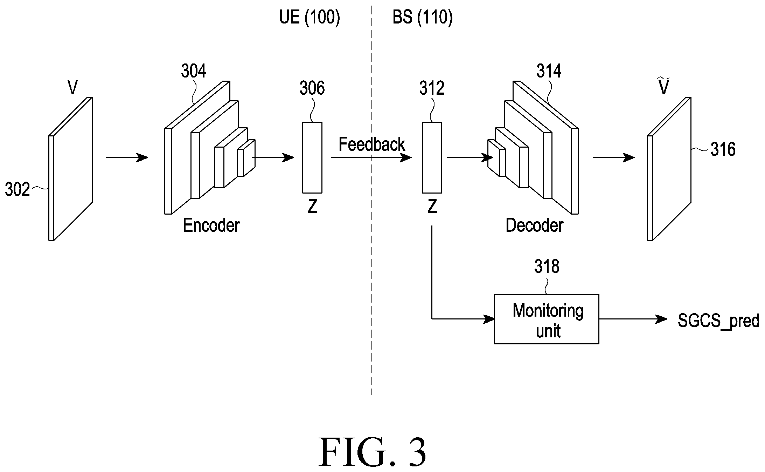

FIG. 3 is a view illustrating network-side monitoring according to an embodiment of the disclosure.

Referring to FIG. 3, the UE 100 may include an encoder 304 performing CSI compression. The UE 100 may obtain a matrix V 302 for channel state feedback. In an embodiment, the matrix V 302 may be obtained by performing eigenvalue decomposition on a channel (e.g., H_hat) estimated by the UE 100 based on a CSI-RS (e.g., CSI-RS 102) received from the base station 110. The encoder 304 may encode (e.g., compress) the matrix V 302 based on a designated AI model and output a vector z 306. In an embodiment, the vector z 306 may include at least one of the elements of the matrix V 302 and/or information related thereto. The UE 100 may include the vector z 306 in the CSI (e.g., CSI 104) and feed it back to the base station 110.

The base station 110 may include a decoder 314 configured to operate in correspondence with the encoder 304 of the UE 100. The base station 110 may obtain a vector z 312 (e.g., vector z 306) from the CSI (e.g., CSI 104) received from the UE 100. The decoder 314 may decode (e.g., decompress) the vector z 312 based on a designated AI model and output a recovered matrix V_hat 316.

In an embodiment, the base station 110 may include a monitoring unit 318 for network-side monitoring. The monitoring unit 318 of the base station 110 may receive the received vector z 312 as input. The monitoring unit 318 may be configured to operate in correspondence with the encoder 204. In an embodiment, the monitoring unit 318 may predict a loss between the matrix V generated by the UE 100 and the matrix V_hat recovered by the base station 110 using the vector z 312 based on a designated AI model, and calculate an SGCS (e.g., SGCS_pred) corresponding to the predicted loss. The base station 110 may utilize the monitoring result by the monitoring unit 318 in various ways. In an embodiment, the base station 110 may reconfigure the AI-based CSI compression based on the monitoring result. In an embodiment, the base station 110 may instruct the UE 100 to at least temporarily deactivate the AI-based CSI compression based on the loss according to the monitoring result falling outside a designated threshold range.

When the base station 110 performs AI-based network-side monitoring by the monitoring unit 318, the AI-based CSI compression may be free from constraints of UE capability, and may also be advantageous in terms of lifecycle management (LCM) since the base station 110 is responsible for both management and operation of the AI model.

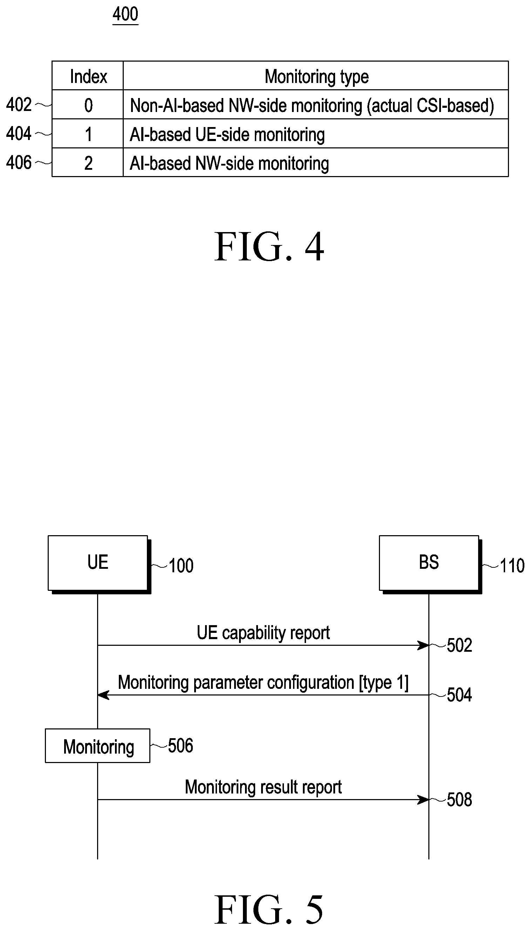

In an embodiment, the base station 110 may configure, for the UE 100, any one of non-AI-based network-side monitoring, AI-based UE-side monitoring, or AI-based network-side monitoring based on UE capability and/or the monitoring result. In an embodiment, the base station 110 may transmit, to the UE 100, information indicating a monitoring type (e.g., a monitoring type indication 400 of FIG. 4).

FIG. 4 is a view illustrating a monitoring type indication according to an embodiment of the disclosure.

Referring to FIG. 4, the monitoring type indication 400 may be set to a value indicating any one of type 0, type 1, or type 2. In an embodiment, type 0 may represent non-AI-based network-side monitoring 402, type 1 may represent AI-based UE-side monitoring 404, and type 2 may represent AI-based network-side monitoring 406.

In an embodiment, the base station 110 may determine whether to set the monitoring type indication 400 to type 0 indicating non-AI-based network-side monitoring 402, based on overhead and/or latency associated with the operation of the UE 100 reporting a ground truth (e.g., matrix V) for the non-AI-based network-side monitoring 402. For example, when the overhead of the ground truth is not greater than a designated reference value and/or the latency for reporting the ground truth is not greater than a designated reference value, the base station 110 may set the monitoring type indication 400 to type 0.

In an embodiment, the base station 110 may determine whether to set the monitoring type indication 400 to type 1 indicating AI-based UE-side monitoring, based on the AI capability (e.g., AI model inference-related capability) of a UE capability report reported by the UE 100 (e.g., the UE capability report of operation 502 of FIG. 5). For example, when the UE capability report includes information indicating AI-capable, and/or the AI computing capability and AI model size-related capability indicated by the UE capability report are determined to be adequate for performing AI-based UE-side monitoring, the base station 110 may set the monitoring type indication 400 to type 1.

In an embodiment, when neither non-AI-based network-side monitoring 402 nor AI-based UE-side monitoring 404 is determined, the base station 110 may set the monitoring type indication 400 to type 2 to indicate network-side monitoring 406.

FIG. 5 is a sequence diagram illustrating a procedure for performing UE-side monitoring according to an embodiment of the disclosure. At least one of the operations described below may be omitted, modified, or executed in a different order.

Referring to FIG. 5, in operation 502, the UE 100 may transmit a UE capability report indicating a capability related to AI model inference to a network (e.g., base station 110). In an embodiment, the UE capability report may include at least one of the following information.
- Information indicating whether AI capability is supported
- AI computing capability information (e.g., input/output memory bandwidth and/or AI-driven FLOPS)
- AI model size-related capability information (e.g., AI model parameters, memory, and/or storage)
- Supported model representation format (MRF) (e.g., open neural network exchange (ONNX))
- Information indicating occurrence or resolution of a resource restriction (e.g., events related to heat, power, or battery)

In an embodiment, the UE capability report may include information indicating AI-capable or AI-incapable. When AI-incapable is indicated, an existing CSI reporting scheme (e.g., codebook-based CSI reporting) may be used.

In an embodiment, the UE capability report may include a value indicating at least one of the AI capability categories in [Table 1] below.

**[Table 1]**

| AI capability category | FLOPS | AI memory (MB) |
|---|---|---|
| Category 0 | 10^6 | 100 |
| Category 1 | 10^7 | |
| Category 2 | 10^8 | 200 |
| Category 3 | 10^9 | |
| Category 4 | 10^10 | 500 |

The UE 100 may include at least one category value from [Table 1] in the UE capability report.

In an embodiment, the UE capability report may be transmitted based on occurrence of an event related to heat (e.g., CPU temperature), battery status (e.g., battery level), or power status (e.g., charging). For example, based on identifying that the UE 100 is entering a power-saving mode, the UE 100 may include information indicating AI-incapable in the UE capability report and transmit it. For example, based on identifying that the power-saving mode of the UE 100 has ended, the UE 100 may include information indicating AI-capable in the UE capability report and transmit it. For example, based on identifying that the UE 100 is connected to a charging power source, the UE 100 may include information indicating AI-capable in the UE capability report and transmit it. For example, based on identifying that the UE 100 is disconnected from a charging power source, the UE 100 may include information indicating AI-incapable in the UE capability report and transmit it.

In operation 504, the base station 110 may transmit, to the UE 100, monitoring configuration information setting monitoring parameters related to the AI-based CSI compression. In an embodiment, the monitoring configuration information may include a monitoring type indication (e.g., the monitoring type indication 400 of FIG. 4). The monitoring type indication 400 may include a value indicating any one of non-AI-based network-side monitoring 402, AI-based UE-side monitoring 404, or AI-based network-side monitoring 406. In an embodiment, the base station 110 may set the monitoring type indication 400 included in the monitoring configuration information to type 1 indicating AI-based UE-side monitoring 404.

In an embodiment, the monitoring configuration information may further include configuration information for a monitoring result report (e.g., monitoring result report configuration information). The monitoring result report configuration information may be used by the UE 100 to transmit a monitoring result report (e.g., operation 508) to the base station 110.

In operation 506, the UE 100 may identify and verify the validity of the AI-based CSI compression by performing AI-based monitoring utilizing a UE-side monitoring model based on the monitoring configuration information. In an embodiment, the UE 100 may perform the monitoring based on identifying that the monitoring configuration information includes the monitoring type indication 400 set to type 1. In an embodiment, the UE 100 may perform the monitoring for determining the validity of the compressed CSI while performing an AI-based CSI compression procedure (not illustrated) (e.g., operation 606). In an embodiment, the AI-based CSI compression procedure may include receiving the CSI-RS 102 from the base station 110 and reporting compressed CSI (e.g., CSI 104) based on the AI-based CSI compression to the base station 110.

In operation 508, the UE 100 may transmit, to the base station 110, a monitoring result report based on a result of performing the monitoring. In an embodiment, the UE 100 may transmit the monitoring result report according to a scheme (e.g., time and/or frequency resource) defined by the monitoring configuration information. In an embodiment, the UE 100 may include, in the monitoring result report, information defined by the monitoring configuration information. In an embodiment, the monitoring result report may include information (e.g., SGCS_pred) indicating a predicted loss obtained by the UE 100 through AI-based UE-side monitoring. In an embodiment, the monitoring result report may include information requesting activation or deactivation of the AI-based CSI compression. The base station 110 may reconfigure, activate, or deactivate the AI-based CSI compression of the UE 100 based on the monitoring result report.

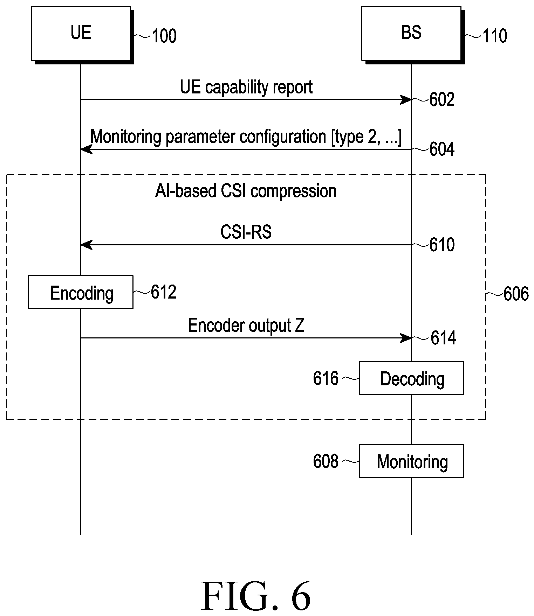

FIG. 6 is a sequence diagram illustrating a procedure for performing network-side monitoring according to an embodiment of the disclosure. At least one of the operations described below may be omitted, modified, or executed in a different order.

Referring to FIG. 6, in operation 602, the UE 100 may transmit a UE capability report to a network (e.g., base station 110). In an embodiment, the UE capability report may be similar to the UE capability report of operation 502.

In operation 604, the base station 110 may transmit monitoring configuration information to the UE 100. In an embodiment, the monitoring configuration information may include a monitoring type indication (e.g., the monitoring type indication 400 of FIG. 4). In an embodiment, the base station 110 may set the monitoring type indication 400 included in the monitoring configuration information to type 2 indicating AI-based network-side monitoring 406.

In an embodiment, when the monitoring configuration information includes the monitoring type indication 400 indicating type 2 AI-based network-side monitoring 406, the monitoring configuration information may further include at least one of the following information.
- Information indicating whether to perform UE-side monitoring fallback (e.g., a 1-bit field, or presence/absence of a designated field)
- Configuration information for a monitoring input report and/or a monitoring result report (e.g., monitoring input report configuration information and/or monitoring result report configuration information)

In an embodiment, the monitoring input report configuration information may be used by the UE 100 to transmit a monitoring input report (e.g., operation 708) to the base station 110 and/or by the UE 100 to transmit a monitoring result report (e.g., operation 810) to the base station 110.

In operation 606, the UE 100 may perform AI-based CSI compression. In an embodiment, the UE 100 may determine not to perform UE-side monitoring based on identifying that the monitoring configuration information includes the monitoring type indication 400 set to type 2. Operation 606 may include operations 610, 612, 614, and 616.

In operation 610, the base station 110 may transmit a CSI-RS (e.g., CSI-RS 102). The UE 100 may receive the CSI-RS 102 and obtain a matrix V from a channel H_hat estimated based on the CSI-RS 102. In operation 612, the UE 100 may encode (e.g., compress) the matrix V to generate an encoder output (e.g., vector z).

In operation 614, the UE 100 may report the CSI 104 comprising the encoder output (e.g., vector z) to the base station 110. In operation 616, the base station 110 may decode (e.g., decompress) the vector z included in the CSI 104 to obtain a recovered matrix V_hat. The recovered matrix V_hat may be used for resource allocation of the base station 110.

In operation 608, the base station 110 may identify and verify the validity of the AI-based CSI compression (e.g., operation 606) by performing AI-based monitoring utilizing a network-side monitoring model based on the monitoring configuration information of operation 604. The vector z received in operation 614 may be used as an input to the network-side monitoring model. In an embodiment, the base station 110 may perform the monitoring based on identifying that the monitoring configuration information includes the monitoring type indication 400 set to type 2. The base station 110 may reconfigure, activate, or deactivate the AI-based CSI compression of the UE 100 based on the monitoring result (e.g., SGCS_pred).

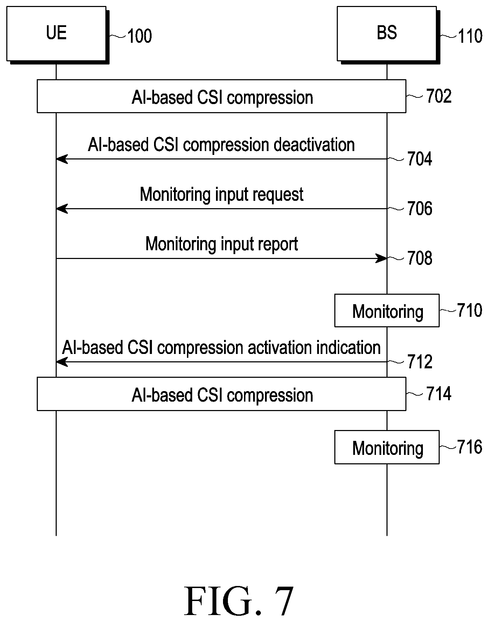

FIG. 7 is a sequence diagram illustrating a procedure for activating AI-based CSI compression according to an embodiment of the disclosure. At least one of the operations described below may be omitted, modified, or executed in a different order.

Referring to FIG. 7, in operation 702, AI-based CSI compression (e.g., operation 606) may be performed between the UE 100 and the base station 110. In operation 704, the base station 110 may transmit, to the UE 100, a message (e.g., an AI-based CSI compression deactivation indication) instructing deactivation of the AI-based CSI compression. In an embodiment, the base station 110 may determine to deactivate the AI-based CSI compression of the UE 100 based on a monitoring result report received from the UE 100 (e.g., operation 508) or a monitoring result by the base station 110 (e.g., operation 608). In an embodiment, the base station 110 may determine to deactivate the AI-based CSI compression of the UE 100 based on receiving, from the UE 100, information requesting deactivation of the AI-based CSI compression (e.g., an AI-based CSI compression deactivation request). In an embodiment, the UE 100 may determine to deactivate the AI-based CSI compression of the UE 100 based on a monitoring result by the UE 100 (e.g., operation 508) and request the base station 110 to deactivate the AI-based CSI compression.

Although not illustrated, the base station 110 may provide the UE 100 with information (e.g., monitoring input report configuration information) configuring a monitoring input report when, or before, the AI-based CSI compression is deactivated. In an embodiment, the monitoring input report configuration information may be included in the monitoring configuration information of operation 604 and transmitted. In an embodiment, the base station 110 may transmit the monitoring input report configuration information (or monitoring configuration information comprising the monitoring input report configuration information) to the UE 100 together with, or after, the AI-based CSI compression deactivation indication.

In an embodiment, the monitoring input report configuration information may include at least one of the following information.
- A period for reporting a monitoring input: For example, 1 second, 2 seconds, or 5 seconds. For example, the period may be set longer than a period in which the base station 110 transmits the CSI-RS.
- A condition for transmitting a monitoring input report (e.g., a monitoring input report triggering event)
- A format of information to be included in a monitoring input report: For example, an encoder output of the UE 100 (e.g., vector z) or a compressed (e.g., quantized) vector z_q (the vector z_q may have a smaller size than the vector z)

In operation 706, the base station 110 may transmit, to the UE 100, information requesting a monitoring input (e.g., a monitoring input request). In an embodiment, the monitoring input request may include monitoring input report configuration information (e.g., a format of information to be included in a monitoring input report).

In operation 708, the UE 100 may report, to the base station 110, a monitoring input based on the monitoring input report configuration information. In an embodiment, the monitoring input may include information on the vector z or vector z_q according to the monitoring input report configuration information.

In operation 710, the base station 110 may perform AI-based monitoring based on the monitoring input. In an embodiment, the base station 110 may perform monitoring using the vector z or vector z_q received via the monitoring input report, rather than the vector z reported through the AI-based CSI compression procedure, as input. The base station 110 may determine whether to activate the AI-based CSI compression based on the monitoring result (e.g., SGCS_pred).

In operation 712, based on determining to activate the AI-based CSI compression according to the monitoring result, the base station 110 may transmit, to the UE 100, a message (e.g., an AI-based CSI compression activation indication) instructing activation of the AI-based CSI compression.

In operation 714, the UE 100 may perform AI-based CSI compression (e.g., operation 606) based on receiving the AI-based CSI compression activation indication. In an embodiment, after the AI-based CSI compression is deactivated in operation 704 and before the AI-based CSI compression activation indication is received in operation 712, the UE 100 may perform CSI reporting according to an existing CSI reporting scheme (e.g., codebook-based CSI reporting).

In operation 716, the base station 110 may perform AI-based monitoring utilizing a network-side monitoring model based on the vector z reported by the UE 100 through the AI-based CSI compression. Operation 716 may be similar to operation 608.

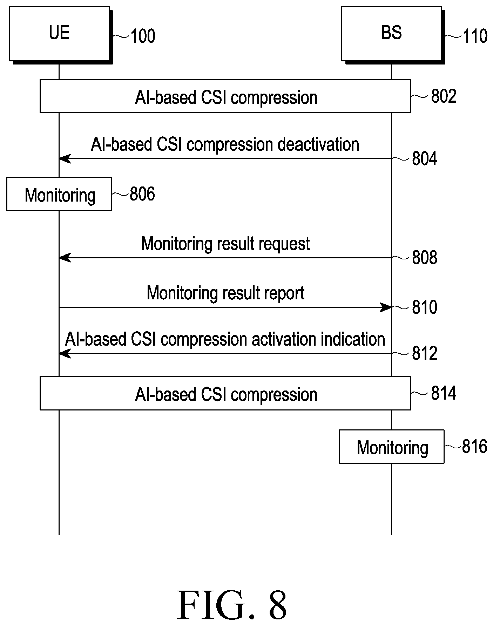

FIG. 8 is a sequence diagram illustrating a procedure for performing UE-side monitoring fallback according to an embodiment of the disclosure. At least one of the operations described below may be omitted, modified, or executed in a different order.

Referring to FIG. 8, in operation 802, AI-based CSI compression (e.g., operation 606) may be performed between the UE 100 and the base station 110. In operation 804, the base station 110 may transmit, to the UE 100, a message (e.g., an AI-based CSI compression deactivation indication) instructing deactivation of the AI-based CSI compression. Operation 804 may be similar to operation 704.

Although not illustrated, the base station 110 may provide the UE 100 with information (e.g., a UE-side monitoring fallback indication) instructing UE-side monitoring fallback when, or before, the AI-based CSI compression is deactivated. In an embodiment, the UE-side monitoring fallback indication may be represented by a value of a 1-bit field or by the presence of a designated field. In an embodiment, the UE-side monitoring fallback indication may be included in the monitoring configuration information of operation 604 and transmitted. In an embodiment, the base station 110 may transmit the UE-side monitoring fallback indication (or monitoring configuration information comprising the UE-side monitoring fallback indication) to the UE 100 together with, or after, the AI-based CSI compression deactivation indication.

In operation 806, the UE 100 may perform monitoring utilizing a UE-side monitoring model based on the UE-side monitoring fallback indication while the AI-based CSI compression is deactivated. In an embodiment, the UE 100 may perform encoding, which is part of the AI-based CSI compression, to generate a vector z. The UE 100 may not report the vector z included in the CSI.

In operation 808, the base station 110 may transmit a monitoring result request to the UE 100. In an embodiment, the base station 110 may transmit the monitoring result request to the UE 100 in order to determine whether to activate the AI-based CSI compression while the AI-based CSI compression is deactivated.

In operation 810, the UE 100 may transmit a monitoring result report to the base station 110. In an embodiment, operation 810 may be similar to operation 508. In an embodiment, the monitoring result report may include information (e.g., SGCS_pred) indicating a predicted loss obtained by the UE 100 in operation 806. In an embodiment, the monitoring result report may be transmitted by the UE 100 in response to receiving the monitoring result request of operation 808.

In an embodiment, operation 808 may be omitted, and the UE 100 may transmit the monitoring result report based on monitoring result report configuration information included in the monitoring configuration information. In an embodiment, the monitoring result report configuration information may include at least one of a transmission period for reporting the monitoring result, information on an event triggering the monitoring result report (e.g., a monitoring result report triggering event), or a format of information to be included in the monitoring result report.

In an embodiment, the UE 100 may transmit the monitoring result report periodically (e.g., period of 1 second, 2 seconds, or 5 seconds) according to the transmission period. In an embodiment, the UE 100 may transmit the monitoring result report according to a designated condition related to a loss (e.g., SGCS_pred) obtained through monitoring (e.g., the monitoring result report triggering event). For example, the UE 100 may include designated information (e.g., SGCS_pred) in the monitoring result report and transmit it when SGCS_pred is less than a designated reference value (e.g., -0.7) (SGCS_pred < -0.7). For example, the UE 100 may include, in the monitoring result report, information requesting activation of the AI-based CSI compression (e.g., an AI-based CSI compression activation request) when SGCS_pred < -0.7 and transmit it.

The base station 110 may determine whether to activate the AI-based CSI compression based on the monitoring result report. In an embodiment, the base station 110 may determine to activate the AI-based CSI compression based on SGCS_pred included in the monitoring result report being less than a designated reference value (e.g., -0.7). In an embodiment, the base station 110 may determine to activate the AI-based CSI compression based on the monitoring result report including an AI-based CSI compression activation request.

In operation 812, based on determining to activate the AI-based CSI compression according to the monitoring result, the base station 110 may transmit, to the UE 100, a message (e.g., an AI-based CSI compression activation indication) instructing activation of the AI-based CSI compression.

In operation 814, the UE 100 may perform AI-based CSI compression (e.g., operation 606) based on receiving the AI-based CSI compression activation indication. In an embodiment, after the AI-based CSI compression is deactivated in operation 804 and before the AI-based CSI compression activation indication is received in operation 812, the UE 100 may perform CSI reporting according to an existing CSI reporting scheme (e.g., codebook-based CSI reporting).

In operation 816, the base station 110 may perform AI-based monitoring utilizing a network-side monitoring model based on the vector z reported by the UE 100 through the AI-based CSI compression. Operation 816 may be similar to operation 608.

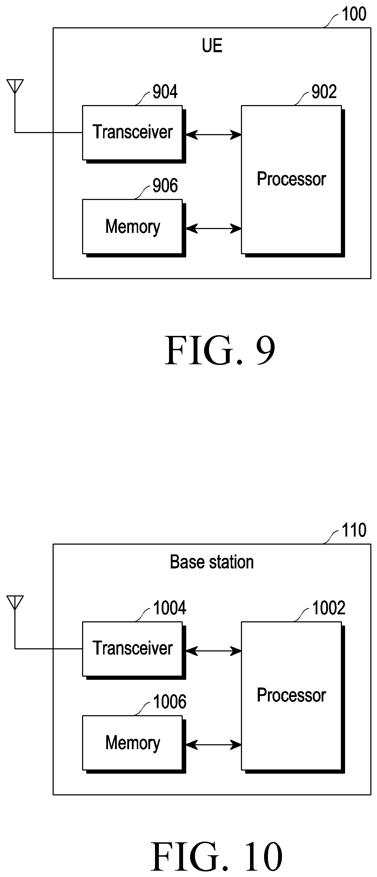

FIG. 9 is a view illustrating an example configuration of a UE in a wireless communication system according to an embodiment of the disclosure. The UE 100 of FIG. 9 may operate through each of the embodiments of FIGS. 2 through 8 described above, as well as through a combination of two or more embodiments. The UE 100 may include a processor 902, a transceiver 904, and memory 906. The memory 906 may include instructions executable by the processor 902. The instructions may be configured to, when executed by the processor 902, cause the UE 100 to operate according to the embodiments of FIGS. 2 through 8. However, the components of the UE 100 are not limited to the examples described above. For example, the UE 100 may include more or fewer components than those described above. Further, one or more of the processor 902, the transceiver 904, and the memory 906 may be implemented in the form of a single chip.

The transceiver 904 is a collective term for a receiver and a transmitter of the UE 100, and may transmit/receive wireless signals to/from the base station 110. The signals transmitted and received may include at least one of control information and data. The transceiver 904 may receive a signal through an antenna and output it to the processor 902, and transmit a signal output from the processor 902 through the antenna. The transceiver 904 may include a radio frequency (RF) transmitter that up-converts and amplifies the frequency of a signal to be transmitted, and an RF receiver that low-noise amplifies and down-converts the frequency of a received signal.

The memory 906 may store a program and data necessary for operation of the UE 100 according to at least one of the embodiments of FIGS. 2 through 8. The memory 906 may store control information or data included in a signal obtained by the UE 100. The memory 906 may be configured as a storage medium or a combination of storage media such as read only memory (ROM), random access memory (RAM), a hard disk, a compact disk ROM (CD-ROM), and a digital video disk (DVD).

The processor 902 may control a series of operations so that the UE 100 may operate according to at least one of the embodiments of FIGS. 2 through 8. The processor 902 may include at least one processing circuit. The processor 902 may control the transceiver 904 to perform, e.g., by the UE 100: an operation of identifying that artificial intelligence (AI)-based channel state information (CSI) compression is deactivated; an operation of receiving a message requesting a monitoring input; an operation of transmitting a monitoring input report; an operation of receiving a message instructing activation of the AI-based CSI compression based on a monitoring result; and/or an operation of reporting compressed CSI by the AI-based CSI compression.

FIG. 10 is a view illustrating an example configuration of a base station in a wireless communication system according to an embodiment of the disclosure. The base station 110 of FIG. 10 may operate through each of the embodiments of FIGS. 2 through 8 described above, as well as through a combination of two or more embodiments. The base station 110 may include a processor 1002, a transceiver 1004, and memory 1006. The memory 1006 may include instructions executable by the processor 1002. The instructions may be configured to, when executed by the processor 1002, cause the base station 110 to operate according to the embodiments of FIGS. 2 through 8. However, the components of the base station 110 are not limited to the examples described above. For example, the base station 110 may include more or fewer components than those described above. Further, one or more of the processor 1002, the transceiver 1004, and the memory 1006 may be implemented in the form of a single chip.

The transceiver 1004 is a collective term for a receiver and a transmitter of the base station 110, and may transmit/receive wireless signals to/from the UE 100. The signals transmitted and received may include at least one of control information and data. The transceiver 1004 may receive a signal through an antenna and output it to the processor 1002, and transmit a signal output from the processor 1002 through the antenna. The transceiver 1004 may include an RF transmitter that up-converts and amplifies the frequency of a signal to be transmitted, and an RF receiver that low-noise amplifies and down-converts the frequency of a received signal.

The memory 1006 may store a program and data necessary for operation of the base station 110 according to at least one of the embodiments of FIGS. 2 through 8. The memory 1006 may store control information or data included in a signal obtained by the base station 110. The memory 1006 may be configured as a storage medium or a combination of storage media such as ROM, RAM, a hard disk, a CD-ROM, and a DVD.

The processor 1002 may control a series of operations so that the base station 110 may operate according to at least one of the embodiments of FIGS. 2 through 8. The processor 1002 may include at least one processing circuit. The processor 1002 may control the transceiver 1004 to perform, e.g., by the base station 110: an operation of identifying that artificial intelligence (AI)-based channel state information (CSI) compression is deactivated; an operation of transmitting a message requesting a monitoring input; an operation of receiving a monitoring input report; an operation of determining activation of the AI-based CSI compression based on a monitoring result; an operation of transmitting a message instructing activation of the AI-based CSI compression; and/or an operation of receiving compressed CSI by the AI-based CSI compression.

The embodiments of the disclosure may resolve issues of transmission overhead and latency associated with the UE 100 reporting a ground truth.

The embodiments of the disclosure may monitor the performance of AI-based CSI compression by enabling the base station 110, which has relatively higher capability than the UE 100, to perform network-side monitoring without being constrained by the capability of the UE.

The embodiments of the disclosure may increase the freshness of a monitoring result by allowing the base station 110 to directly utilize the monitoring result obtained through network-side monitoring.

The embodiments of the disclosure may provide a procedure for resuming monitoring when AI-based CSI compression is deactivated.

The methods according to the embodiments descried in the specification or claims of the disclosure may be implemented in hardware, software, or a combination of hardware and software. When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included. The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described embodiments, the components included in the disclosure are represented in singular or plural forms depending on specific embodiments proposed. However, the singular or plural expression is selected to be suitable for the presented circumstance for convenience of description, and the disclosure is not limited to singular or plural components, and components represented in plural may be configured as singular, and components represented in singular may be configured as plural.

The embodiments of the disclosure disclosed in the detailed description and drawings are merely provided as specific examples to easily describe the technical content of the disclosure and aid in understanding the disclosure, and are not intended to limit the scope of the disclosure. In other words, it is apparent to those skilled in the art to which the disclosure belongs that other modifications based on the technical spirit of the disclosure may be implemented. Further, the embodiments described in the disclosure may be combined and operated as needed.

## Claims

1. A method by a base station, the method comprising:
receiving, from a user equipment (UE), a reporting message comprising a monitoring input related to monitoring of artificial intelligence (AI)-based channel state information (CSI) compression, while the AI-based CSI compression by the UE is deactivated;
performing a first monitoring of the AI-based CSI compression based on the monitoring input;
transmitting, to the UE, an indication message for activating the AI-based CSI compression generated based on a result of the first monitoring;
receiving, from the UE, compressed CSI by the AI-based CSI compression after transmitting the indication message; and
performing a second monitoring of the AI-based CSI compression based on the compressed CSI.

2. The method of claim 1, wherein the monitoring input includes at least one of a vector z or a quantized vector z, wherein the vector z is generated by the UE estimating a channel based on a channel state information reference signal (CSI-RS) received from the base station, performing eigenvalue decomposition on the estimated channel to obtain a matrix V, and compressing the matrix V.

3. The method of claim 1, further comprising transmitting, to the UE, a request message for the monitoring input, based on identifying that the AI-based CSI compression is deactivated.

4. The method of claim 1, further comprising transmitting, to the UE, monitoring configuration information related to reporting of the monitoring input associated with the AI-based CSI compression, wherein the monitoring configuration information indicates at least one of a transmission period for reporting the monitoring input or a format of information included in the monitoring input.

5. The method of claim 4, wherein the monitoring configuration information includes a monitoring type indication indicating any one of non-AI-based network-side monitoring, AI-based UE-side monitoring, or AI-based network-side monitoring.

6. The method of claim 4, wherein the monitoring configuration information includes at least one of a transmission period for reporting a result of the second monitoring, information on an event for reporting the result of the second monitoring, or a format of information included in a report of the result of the second monitoring.

7. The method of claim 1, further comprising:
receiving, from the UE, a monitoring result report of the AI-based CSI compression, while the AI-based CSI compression is deactivated;
determining whether to activate the AI-based CSI compression based on the monitoring result report; and
transmitting, to the UE, an indication message for activating the AI-based CSI compression according to a result of the determination.

8. A method by a user equipment (UE), the method comprising:
transmitting, to a base station, a reporting message comprising a monitoring input related to monitoring of artificial intelligence (AI)-based channel state information (CSI) compression, while the AI-based CSI compression is deactivated;
receiving, from the base station, an indication message for activating the AI-based CSI compression after transmitting the reporting message; and
transmitting, to the base station, compressed CSI by the AI-based CSI compression after receiving the indication message.

9. The method of claim 8, wherein the monitoring input includes at least one of a vector z or a quantized vector z, wherein the vector z is generated by the UE estimating a channel based on a channel state information reference signal (CSI-RS) received from the base station, performing eigenvalue decomposition on the estimated channel to obtain a matrix V, and compressing the matrix V.

10. The method of claim 8, further comprising receiving, from the base station, a request message for the monitoring input, while the AI-based CSI compression is deactivated.

11. The method of claim 8, further comprising receiving, from the base station, monitoring configuration information related to reporting of the monitoring input associated with the AI-based CSI compression, wherein the monitoring configuration information indicates at least one of a transmission period for reporting the monitoring input, a format of information included in the monitoring input, or a monitoring type indication, and wherein the monitoring type indication indicates any one of non-AI-based network-side monitoring, AI-based UE-side monitoring, or AI-based network-side monitoring.

12. The method of claim 11, wherein the monitoring configuration information includes at least one of a transmission period for reporting a monitoring result, information on an event triggering a monitoring result report, or a format of information included in a monitoring result report.

13. The method of claim 8, further comprising:
performing monitoring of the AI-based CSI compression, while the AI-based CSI compression is deactivated;
transmitting, to the base station, a monitoring result report of the AI-based CSI compression; and
receiving, from the base station, an indication message for activating the AI-based CSI compression after transmitting the monitoring result report.

14. A base station, comprising:
a transceiver; and
a processor coupled to the transceiver, wherein the processor is configured to perform:
receiving, from a user equipment (UE), a reporting message comprising a monitoring input related to monitoring of artificial intelligence (AI)-based channel state information (CSI) compression, while the AI-based CSI compression by the UE is deactivated;
performing a first monitoring of the AI-based CSI compression based on the monitoring input;
transmitting, to the UE, an indication message for activating the AI-based CSI compression generated based on a result of the first monitoring;
receiving, from the UE, compressed CSI by the AI-based CSI compression after transmitting the indication message; and
performing a second monitoring of the AI-based CSI compression based on the compressed CSI.

15. A user equipment (UE), comprising:
a transceiver; and
a processor coupled to the transceiver, wherein the processor is configured to perform:
transmitting, to a base station, a reporting message comprising a monitoring input related to monitoring of artificial intelligence (AI)-based channel state information (CSI) compression, while the AI-based CSI compression is deactivated;
receiving, from the base station, an indication message for activating the AI-based CSI compression after transmitting the reporting message;
transmitting, to the base station, compressed CSI by the AI-based CSI compression after receiving the indication message.
